# FASCICULE DE BREVET EUROPEEN

(11) **EP 0 790 716 B1**
(45) Date de publication et mention de la délivrance du brevet: **03.11.1999**
(21) Numéro de dépôt: 97400263.6
(22) Date de dépôt: 06.02.1997
(51) Int. Cl.: H04B 10/08, H04B 10/17

(54) **Installation de transmission de signaux par voie optique comprenant un système de surveillance des répéteurs**
Optische Signalübertragungsanlage mit einem Zwischenverstärkerüberwachungssystem
Installation for optical signal transmission comprising a repeater monitoring system

(30) Priorité: 13.02.1996 FR 9601742
(43) Date de publication de la demande: 20.08.1997
(73) Titulaire: ALCATEL, 75008 Paris (FR)
(72) Inventeur: Gautheron, Olivier, 78180 Montigny Le Bretonneux (FR)
(74) Mandataire: Sciaux, Edmond

(56) Documents cités:
- FR-A- 2 696 302
- PATENT ABSTRACTS OF JAPAN vol. 95, no. 007 & JP 07 183871 A (NEC CORP), 21 Juillet 1995,

## Description

L'invention est relative à un système de surveillance ou supervision des répéteurs d'une installation de transmission de signaux par voie optique.

La transmission de signaux par fibres optiques est aujourd'hui une technique courante pour diverses applications, notamment pour les lignes téléphoniques sous-marines. Elle présente, notamment, l'avantage de permettre de grands débits à large bande sans altération notable des signaux.

Une installation de ce type comprend un centre d'émission dans lequel on prévoit au moins une source laser dont on module l'énergie lumineuse par le signal à émettre ; cette énergie modulée est transmise par des fibres optiques, à au moins un récepteur à distance. Entre l'émetteur et le récepteur, sont disposés des répéteurs formés d'amplificateurs optiques tels que des amplificateurs optiques à fibre dopée. Le rôle de ces répéteurs est d'amplifier périodiquement le signal, naturellement affaibli par la transmission, de façon à ce qu'il parvienne au récepteur avec un niveau satisfaisant.

Les installations les plus élaborées comportent des dérivations vers des récepteurs secondaires. Chaque dérivation, également à fibres optiques, présente aussi un ou plusieurs répéteurs.

Par exemple, une liaison optique transatlantique comporte un émetteur en Amérique du Nord et son récepteur principal dans un pays d'Europe. Les dérivations vont vers d'autres pays d'Europe où se trouvent les récepteurs secondaires.

Le document **FR 2 696 302** décrit un système de surveillance des répéteurs d'une installation de transmission émettant des signaux de données sur des conducteurs optiques, dans laquelle chaque répéteur comporte un amplificateur optique pour amplifier les signaux transmis sur les conducteurs optiques, et dans laquelle un centre principal comporte un émetteur qui émet un signal de télésurveillance vers chaque répéteur. Les signaux de données sont portés par une seule longueur d'onde. Le signal de télésurveillance est portée par une autre longueur d'onde qui est choisie aussi proche que possible de la longueur d'onde portant les signaux de données, pour que l'affaiblissement du signal de télésurveillance soit compensé par le gain des amplificateurs des répéteurs.

Dans une installation complexe à très grand débit, la transmission peut s'effectuer avec plusieurs longueurs d'ondes optiques de valeurs différentes, c'est-à-dire avec plusieurs émetteurs laser.

Le fonctionnement correct d'une telle installation dépend, pour une bonne part, du fonctionnement correct des répéteurs. Il est donc nécessaire de surveiller périodiquement, ou en permanence, ces dispositifs. Mais comme ces derniers sont dispersés et disposés souvent en des emplacements difficiles d'accès, cette surveillance est effectuée à distance. A cet effet, on envoie, à partir du centre d'émission, sur la ligne, un signal de télésurveillance, souvent superposé au signal portant l'information utile. Ce signal de télésurveillance a, en général, un débit de un kilobit par seconde, alors que le signal utile a un débit de cinq gigabits par seconde. Son niveau est habituellement faible par rapport à celui du signal utile.

La télésurveillance s'effectue par un protocole d'interrogation de chaque répéteur. Chacun de ces derniers est localisé par son adresse numérique. Par exemple, le protocole d'interrogation consiste à détecter la puissance d'entrée, la puissance de sortie et la puissance de la pompe laser de l'amplificateur optique. Les signaux de réponse sont réémis par le répéteur, sur la voie de retour de la ligne, vers le centre d'émission. Dans un système plus simple, le protocole d'interrogation se limite à détecter la puissance de sortie de chaque répéteur.

Dans un système de transmission mono-canal, c'est-à-dire à une seule longueur d'onde optique, le signal de télésurveillance est superposé au signal utile, c'est-à-dire que le signal utile est modulé par le signal de télésurveillance. Le taux de modulation est habituellement de l'ordre de 5%. Cette valeur constitue un compromis entre la nécessité de réduire la perturbation apportée au signal utile et la nécessité de transmettre correctement le signal de télésurveillance.

Dans une installation à plusieurs longueurs d'ondes optiques et à dérivations, il est préférable de ne pas moduler individuellement chaque longueur d'onde de transmission des signaux utiles. En effet, dans de telles installations, certaines des longueurs d'onde étant affectées à la transmission vers des dérivations, le signal de télésurveillance serait perdu à l'aval de la dérivation.

Il est vrai qu'un centre secondaire dans une dérivation réémet un signal utile; mais on préfère ne pas superposer un signal de télésurveillance à ce signal utile réémis afin de réserver la surveillance au centre principal.

Dans ces conditions, le signal à la sortie d'un répéteur en aval de la dérivation, sera modulé avec un taux inférieur à la valeur optimale de 5%. En effet, chaque répéteur émettant à puissance de sortie constante, on comprend que si le répéteur transmet deux longueurs d'ondes dont l'une ne porte pas de modulation et dont l'autre porte une modulation à 5%, le signal de sortie sera modulé à 2,5% si les puissances optiques des deux longueurs d'onde sont égales.

En outre, le gain des amplificateurs optiques n'étant pas le même pour toutes les longueurs d'onde, on comprend aussi que la diminution de la modulation sera encore plus sensible si la longueur d'onde extraite et réinjectée sans signal de télésurveillance correspond à la valeur maximale du gain des amplificateurs optiques.

L'invention remédie à ces inconvénients. En outre, elle permet de rendre quasiment négligeable la perturbation introduite par la modulation de télésurveillance.

Elle est caractérisée en ce que l'installation comprend, pour l'émission et la transmission du signal de télésurveillance, une source à large spectre de longueurs d'ondes optiques correspondant à la bande passante des amplificateurs optiques.

Le signal lumineux destiné à être modulé par le signal de télésurveillance est, par exemple, émis par une diode électroluminescente présentant un spectre continu de longueurs d'ondes s'étendant sur 50 à 100 nanomètres (nm) et centré sur la plage spectrale du gain des amplificateurs optiques. Cette plage est en général de l'ordre de 10 nanomètres.

La modulation de télésurveillance est répartie sur toute la bande spectrale optique utile de 10 nm. Ainsi, la perturbation introduite par le signal de télésurveillance est réduite en proportion du rapport entre la largeur spectrale occupée par chaque longueur d'onde utile (transmettant les signaux d'information) et la largeur spectrale globale de 10 nanomètres. Par exemple, si chaque longueur d'onde optique utile occupe une largeur spectrale de 0,5 nanomètre, la perturbation sur la puissance utile est de l'ordre de 5% si la puissance émise par la source affectée à la télésurveillance est du même ordre de grandeur que la puissance des sources affectées aux signaux utiles. Mais, de préférence, la puissance fournie par la diode électroluminescente ne sera que de l'ordre de 5% de la puissance totale émise par les diverses sources. Dans ce cas, la perturbation sera d'au plus 0,25%. Elle est donc négligeable.

Par ailleurs, la répartition du signal de télésurveillance sur tout le spectre utile facilite la réalisation d'une installation de transmission car le choix de la position spectrale des longueurs d'ondes utiles n'est pas limité par la télésurveillance, comme ce serait le cas si une longueur d'onde particulière était affectée à cette télésurveillance.

L'émetteur affecté à la télésurveillance étant distinct des émetteurs utiles, il peut donc présenter une bande passante électrooptique moindre que celle exigée pour l'émission de signaux utiles. Il en résulte un moindre coût.

Dans une réalisation, on diminue encore la perturbation apportée par le signal de télésurveillance en prévoyant, dans la voie de télésurveillance, des filtres coupe-bandes qui rejettent les bandes affectées à la transmission des signaux utiles.

D'autres caractéristiques et avantages de l'invention apparaîtront avec la description de certains de ses modes de réalisation, celle-ci étant effectuée en se référant aux dessins ci-annexés, sur lesquels :
la figure 1 est un schéma d'une installation selon l'invention,
la figure 2 correspond à une partie de l'installation de la figure 1,
la figure 3 est un diagramme de gain d'un répéteur de l'installation de la figure 1, et
la figure 4 est un diagramme se rapportant également à la figure 1.

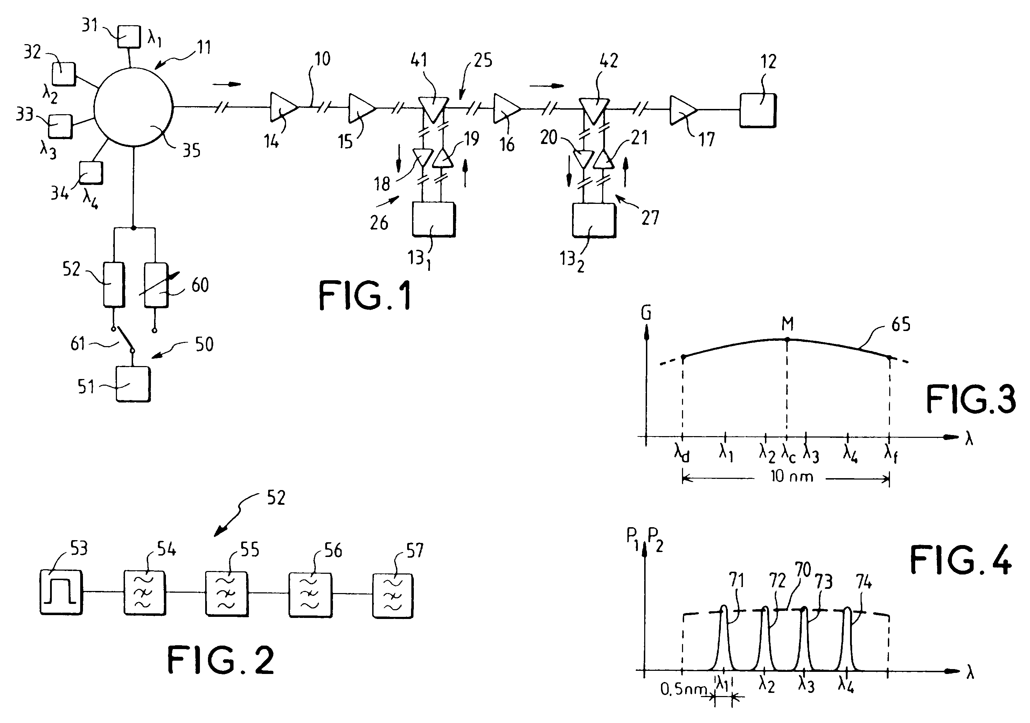

L'exemple représenté sur la figure 1 est un système de communication à fibres ou conducteurs optiques 10 entre, d'une part, un centre principal 11 d'émission/réception et de contrôle et, d'autre part, un centre 12 de réception/émission. En outre, des centres secondaires de réception/émission 13₁, 13₂, etc. sont également destinés à recevoir des signaux provenant du centre principal 11 et à émettre d'autres signaux vers les autres récepteurs de l'installation.

La liaison à fibres optiques 10 comprend, de façon en soi connue, un jeu de fibres optiques en silice légèrement dopée, par exemple au germanium, transmettant dans des conditions optimales des longueurs d'ondes comprises entre 1500 et 1600 nanomètres.

Le câble à fibres optiques qui, par exemple, est destiné à transmettre des données numériques ou des communications téléphoniques s'étend sur des grandes distances, par exemple plusieurs milliers de kilomètres. Dans ces conditions, il est nécessaire de régénérer de place en place le signal transmis par le conducteur optique. En effet, bien que faible, l'absorption des fibres atténue fortement le signal sur une longue distance. Si la fibre est en silice légèrement dopée au germanium, l'atténuation est d'environ 0,2 décibel par kilomètre.

On prévoit un ensemble de répéteurs 14, 15, 16, 17, 18, 19, 20 et 21, etc. sur la liaison principale 25 et sur les dérivations 26, 27, etc.

Un répéteur comprend habituellement un ou plusieurs amplificateurs optiques à fibres dopées et à laser de pompage permettant l'inversion de population des électrons dans le matériau de la fibre dopée.

Ces répéteurs, qui sont disposés le plus souvent en des endroits peu ou pas accessibles, sont surveillés à distance.

Le centre principal d'émission 11 présente quatre émetteurs 31, 32, 33 et 34 émettant chacun, sur une longueur d'onde optique déterminée, des signaux utiles, c'est-à-dire des signaux de données numériques ou des signaux téléphoniques. Chaque longueur d'onde est émise par un laser (non montré).

La longueur d'onde optique de chacun des lasers des émetteurs 31, 32, 33, 34, a une largeur spectrale d'environ 0,5 nanomètre et ces lasers émettent dans un domaine spectral optique de largeur 10 nanomètres. Cette largeur de 10 nanomètres est imposée par le gain des répéteurs, comme on le verra plus loin en relation avec la figure 3.

Les signaux des émetteurs 31 à 34 sont transmis au conducteur optique 10 par l'intermédiaire d'un coupleur 35.

L'émetteur 31 comporte un laser de longueur d'onde λ₁ (figure 3) destiné à transmettre des informations vers le centre 13₁ de réception/émission à l'extrémité de la dérivation 26. Ce centre 13₁ émet, de son côté, d'autres informations vers le centre 12 de réception/émission et les autres centres 13₂ (à l'extrémité de la dérivation 27) ainsi que vers le centre 11. Cette émission s'effectue sur la même longueur d'onde optique λ₁.

De façon analogue, l'émetteur 32 émet sur une autre longueur d'onde λ₂ qui est destinée à être dirigée vers la seconde dérivation 27. Comme le premier centre secondaire 13₁, le second centre secondaire 13₂ émet, de son côté, d'autres signaux de longueur d'onde λ₂ vers d'autres récepteurs secondaires, vers le récepteur principal 12 et vers le centre 11.

L'émetteur 33 émet, sur une troisième longueur d'onde λ₃, un signal destiné à une troisième dérivation, non représentée.

Enfin, le quatrième émetteur λ₄ émet uniquement vers le centre principal de réception 12.

A chaque branchement entre la ligne principale 10 et une dérivation, on prévoit un organe de dérivation 41, 42, etc. qui effectue la dérivation vers le centre secondaire correspondant.

Pour la télésurveillance des répéteurs 14 à 21, on prévoit un émetteur/récepteur de télésurveillance 50 au centre principal 11. Cet émetteur/récepteur 50 envoie sur la ligne 10 des signaux numériques à débit relativement bas par rapport au débit des signaux transmis par les émetteurs 31 à 34. Par exemple, les signaux d'information ont un débit de 5 gigabits par seconde, alors que les signaux de télésurveillance ont un débit de 1 kilobit par seconde. Ces derniers sont modulés à une fréquence de l'ordre de 100 kHz.

Les signaux de télésurveillance sont, par exemple, constitués par des paquets numériques de signaux d'interrogation portant les diverses adresses des répéteurs. Chaque répéteur est agencé pour renvoyer en sens inverse sur la ligne 10, vers le centre 11, un signal représentant sa puissance d'entrée, sa puissance de sortie et la puissance de sa pompe.

Selon un aspect important de l'invention, le signal de télésurveillance est porté par une onde lumineuse qui n'est pas monochromatique mais s'étend sur tout le spectre optique utile de la fibre, c'est-à-dire, dans l'exemple, sur une largeur spectrale d'au moins 10 nanomètres (figures 3 et 4).

Ainsi, le module 50 de télésurveillance comprend un émetteur 51 à diode électroluminescente émettant un spectre continu de longueurs d'ondes centrées sur 1550 nanomètres avec une largeur de l'ordre de 100 nanomètres. Cette diode électroluminescente est, par exemple une diode InGaAs de puissance minimum 0.1 mw, avec une bande passante électrooptique de 100 MHz. Une telle diode émet dans la gamme de 1530 à 1580 nanomètres. Son spectre d'émission a une largeur de 50 nm à mi-hauteur.

L'amplitude du rayonnement de la diode électroluminescente est modulée par les signaux de télésurveillance.

Pour minimiser l'effet perturbateur des signaux de télésurveillance produits par l'émetteur 51 sur les signaux utiles produits par les émetteurs 31 à 34, la puissance de l'émetteur 51 est d'environ 5% de la puissance totale transmise sur la ligne 10.

Le signal de télésurveillance, produit par l'émetteur 51, est transmis au coupleur 35 par l'intermédiaire de moyens de filtrage 52 comprenant (figure 2) un filtre passe-bande 53 pour éliminer les longueurs d'ondes se trouvant en dehors de la fenêtre utile de 10 nanomètres, un filtre 54 pour éliminer la longueur d'onde λ₁ et des filtres 55, 56 et 57 pour éliminer, respectivement, les longueurs d'ondes λ₂, λ₃ et λ₄.

Grâce aux filtres 54, 55, 56 et 57, on minimise la perturbation que pourrait apporter aux signaux utiles la longueur d'onde de télésurveillance.

Même en l'absence de ces filtres, la perturbation est faible. Elle est fonction, d'une part, du rapport entre la puissance du signal produit par l'émetteur 51 et la puissance totale et, d'autre part, du rapport entre la largeur spectrale occupée par un laser d'émission et la largeur spectrale totale de 10 nanomètres. Dans l'exemple décrit ce dernier rapport est de 0,5/10.

Dans l'installation représentée sur la figure 1, on prévoit, en outre, un filtre accordable 60 relié, d'une part, au coupleur 35 et, d'autre part, à la sortie de l'émetteur 51. Un commutateur 61 permet de connecter l'émetteur 51 au coupleur 35, soit par les moyens de filtrage 52, soit par le filtre accordable 60. Le filtre 60 est accordable sur les longueurs d'ondes des lasers des émetteurs 31, 32 et 33 de façon à permettre la télésurveillance des répéteurs 18, 19, 20, 21... sur les dérivations 26, 27... Ce filtre 60 n'est pas en service quand les répéteurs 14, 15, 16, 17, sur la voie principale, sont surveillés.

En variante, les signaux de télésurveillance pour les répéteurs sur les dérivations sont, de façon classique, produits par les émetteurs 31, 32 et 33, ces signaux de télésurveillance se superposant aux signaux utiles.

La figure 3 est un diagramme sur lequel on a porté en ordonnées le gain G d'un répéteur - c'est-à-dire d'un amplificateur optique - en fonction de la longueur d'onde λ. La courbe 65 présente un maximum M pour la longueur d'onde λ_{c} et est minimale pour les longueurs d'onde λ_{d} et λ_{f} de début et de fin de la bande spectrale à laquelle est limitée l'installation. Cette courbe 65 permet de comprendre pourquoi la largeur spectrale de l'installation de transmission est limitée à 10 nanomètres. On voit en effet qu'avec une série d'amplificateurs optiques disposés en cascade la courbe résultante sera accentuée, avec une différence de gain plus marquée entre la longueur d'onde λ_{c}, située au centre de la fenêtre de 10 nanomètres, et les longueurs d'ondes λ_{d} et λ_{f} situées aux extrémités de la fenêtre.

La figure 4 est un autre diagramme sur lequel la longueur d'onde est portée en abscisses. La courbe 70 représente la répartition de la puissance P₁ d'émission de la diode électroluminescente de l'émetteur 51 dans le spectre utile de longueurs d'ondes de 10 nanomètres. Les courbes 71, 72, 73 et 74, représentent les puissances P₂ d'émission des lasers des émetteurs 31 à 34. On notera que la puissance P₁ (courbe 70) n'est pas à l'échelle des puissances P₂ puisqu'elle est environ vingt fois moins importante. Quoiqu'il en soit, la figure 4 permet de comprendre que le signal de télésurveillance est "dilué" sur toute la bande utile de 10 nanomètres. Son effet perturbateur est donc réduit.

## Revendications

1. Système de surveillance des répéteurs (14 à 21) d'une installation donnée de transmission de signaux optiques sur des conducteurs optiques (10), dans laquelle chaque répéteur (14, ...) comporte un amplificateur optique pour amplifier les signaux transmis par les conducteurs optiques (10), et dans laquelle un centre principal (11) comporte un émetteur (51) qui émet un signal de télésurveillance vers chaque répéteur ;
**caractérisé** en ce que les signaux de télésurveillance présentent un spectre large de longueurs d'ondes optiques, de préférence de largeur au moins égale à la largeur du spectre utile de longueurs d'ondes des signaux optiques émis sur les conducteurs (10).

2. Système selon la revendication 1, caractérisé en ce que l'émetteur (51) du signal de télésurveillance comporte une diode électroluminescente.

3. Système selon la revendication 2, caractérisé en ce que l'amplificateur optique de chaque répéteur est à puissance constante .

4. Système selon l'une quelconque des revendications précédentes, caractérisé en ce que la largeur du spectre utile est de l'ordre de 10 nanomètres.

5. Système selon l'une quelconque des revendications précédentes, caractérisé en ce que la puissance de l'émetteur (51) de signaux de télésurveillance est de l'ordre du vingtième de la puissance totale utile émise sur les conducteurs optiques (10).

6. Système selon l'une quelconque des revendications précédentes, caractérisé en ce que l'émetteur (51) du signal de télésurveillance comprend une source de largeur spectrale supérieure à la largeur utile, et en ce qu'un filtre (53) de type passe-bande limite la transmission à la largeur spectrale utile.

7. Système selon l'une quelconque des revendications 1 à 6, caractérisé en ce qu'il est destiné à une installation comprenant, pour l'émission des signaux utiles, plusieurs émetteurs (31, 32, 33, 34) émettant sur des longueurs d'ondes optiques différentes.

8. Système selon la revendication 7, caractérisé en ce qu'il est destiné à une installation comprenant des dérivations (26, 27) vers des centres récepteurs/émetteurs secondaires (13₁, 13₂), chaque émetteur secondaire fournissant des signaux utiles sur une longueur d'onde optique déterminée et dépourvue de signal de télésurveillance.

9. Système selon l'une quelconque des revendications précédentes, caractérisé en ce qu'il comprend au moins un filtre (54, 55, 56, 57) pour éliminer du signal de télésurveillance transmis sur les conducteurs optiques (10) les longueurs d'ondes correspondant à la longueur d'onde utile, ou aux longueurs d'ondes utiles (λ₁, λ₂, λ₃, λ₄).

10. Système selon la revendication 8, caractérisé en ce que, pour la surveillance des répéteurs (18, 29, 20, 21) des dérivations (26, 27), il comprend au moins un filtre accordable (60) sur la longueur d'onde (λ₁, λ₂) prévue pour la dérivation, ce filtre reliant la sortie de l'émetteur (51) du signal de télésurveillance au conducteur optique (10), un commutateur (61) permettant de mettre hors service ce filtre pour la télésurveillance des répéteurs (14, 15, 16, 17) du conducteur principal (10).

11. Système selon l'une quelconque des revendications précédentes, caractérisé en ce qu'il est destiné à une installation dans laquelle les conducteurs optiques comprennent des fibres optiques en silice dopée au germanium.

12. Installation de transmission de signaux par conducteurs optiques (10) comprenant un système de surveillance des répéteurs selon l'une quelconque des revendications précédentes.

## Claims

1. A system for monitoring the repeaters (14 through 21) of a given installation for transmission of signals on optical conductors (10), in which installation each repeater (14, ...) includes an optical amplifier for amplifying the signals transmitted by the optical conductors (10) and in which a main centre (11) includes a transmitter (51) which transmits a remote monitoring signal to each repeater, characterised in that the remote monitoring signals have a wide spectrum of optical wavelengths, preferably at least as wide as the wanted spectrum of wavelengths of the optical signals transmitted on the conductors (10).

2. The system as claimed in claim 1 characterised in that the remote monitoring signal transmitter (51) includes a light-emitting diode.

3. The system as claimed in claim 2 characterised in that the optical amplifier of each repeater is a constant power amplifier.

4. The system as claimed in any one of the preceding claims characterised in that the width of the wanted spectrum is in the order of 10 nm.

5. The system as claimed in any one of the preceding claims characterised in that the power of the remote monitoring signal transmitter (51) is in the order of one twentieth the total wanted power transmitted on the optical conductors (10).

6. The system as claimed in any one of the preceding claims characterised in that the remote monitoring signal transmitter (51) comprises a source having a bandwidth greater than the wanted bandwidth and characterised in that a bandpass type filter (53) limits transmission to the wanted bandwidth.

7. The system as claimed in any one of claims 1 to 6, characterised in that it is adapted for an installation comprising a plurality of transmitters (31, 32, 33, 34) for transmitting wanted signals on different optical wavelengths.

8. The system as claimed in claim 7, characterised in that it is adapted for an installation comprising branch connections (26, 27) to secondary receive/transmit centres (13₁, 13₂), each secondary transmitter supplying wanted signals at a particular optical wavelength and with no remote monitoring signal.

9. The system as claimed in any one of the preceding claims, characterised in that it comprises at least one filter (54, 55, 56, 57) for eliminating from the remote monitoring signal transmitted on the optical conductors (10) the wavelengths corresponding to the wanted wavelength or wavelengths (λ₁, λ₂, λ₃, λ₄).

10. The system as claimed in claim 8, characterised in that, for monitoring the repeaters (18, 19, 20, 21) of the branch connections (26, 27), comprises at least one filter (60) which can be tuned to the wavelength (λ₁, λ₂) provided for the branch connection, said filter connecting the output of the remote monitoring signal transmitter (51) to the optical conductor (10), a switch (61) enabling said filter to be switched out of use for remote monitoring of the repeaters (14, 15, 16, 17) of the main conductor (10).

11. The system as claimed in any one of the preceding claims, characterised in that it is adapted for an installation in which the optical conductors comprise optical fibres made of silica doped with germanium.

12. An installation for transmitting signals via optical conductors (10) comprising a system for monitoring repeaters as claimed in any one of the preceding claims.

## Patentansprüche

1. System zur Überwachung der Repeater (14 bis 21) einer gegebenen Anlage zur Übertragung von optischen Signalen auf optischen Leitern (10), bei der jeder Repeater (14, ...) einen optischen Verstärker umfaßt, um die durch die optischen Leiter (10) übertragenen Signale zu verstärken, und bei der eine Hauptzentrale (11) einen Sender (51) umfaßt, der ein Fernüberwachungssignal zu jedem Repeater sendet;
dadurch gekennzeichnet, daß die Fernüberwachungssignale ein breites Spektrum von optischen Wellenlängen aufweisen, vorzugsweise von einer Breite, die wenigstens gleich der Breite des Nutzspektrums der Wellenlängen der optischen Signale ist, die auf den Leitern (10) gesendet werden.

2. System nach Anspruch 1, dadurch gekennzeichnet, daß der Sender (51) des Fernüberwachungssignals eine Leuchtdiode umfaßt.

3. System nach Anspruch 2, dadurch gekennzeichnet, daß der optische Verstärker eines jeden Repeaters eine konstante Leistung hat.

4. System nach einem beliebigen der vorhergehenden Ansprüche, dadurch gekennzeichnet, daß die Breite des Nutzspektrums von der Größenordnung von 10 nm ist.

5. System nach einem beliebigen der vorhergehenden Ansprüche, dadurch gekennzeichnet, daß die Leistung des Senders (51) von Fernüberwachungssignalen von der Größenordnung von einem Zwanzigstel der gesamten auf den optischen Leitern (10) gesendeten Nutzleistung ist.

6. System nach einem beliebigen der vorhergehenden Ansprüche, dadurch gekennzeichnet, daß der Sender (51) des Fernüberwachungssignals eine Quelle mit einer spektralen Breite umfaßt, die größer ist als die Nutzbreite, und daß ein Filter (53) vom Bandpaßtyp die Übertragung auf die spektrale Nutzbreite begrenzt.

7. System nach einem beliebigen der Ansprüche 1 bis 6, dadurch gekennzeichnet, daß es für eine Anlage bestimmt ist, die für das Senden der Nutzsignale mehrere Sender (31, 32, 33, 34) umfaßt, die auf verschiedenen optischen Wellenlängen senden.

8. System nach Anspruch 7, dadurch gekennzeichnet, daß es für eine Anlage bestimmt ist, die Nebenleitungen (26, 27) zu sekundären Empfangs/Sendezentralen (13₁, 13₂) umfaßt, wobei jeder sekundäre Sender Nutzsignale auf einer festgelegten optischen Wellenlänge liefert, die frei von Fernüberwachungssignal ist.

9. System nach einem beliebigen der vorhergehenden Ansprüche, dadurch gekennzeichnet, daß es wenigstens ein Filter (54, 55, 56, 57) umfaßt, um aus dem auf den optischen Leitern (10) übertragenen Fernüberwachungssignal Wellenlängen zu eliminieren, die der Nutzwellenlänge oder den Nutzwellenlängen (λ₁, λ₂, λ₃, λ₄) entsprechen.

10. System nach Anspruch 8, dadurch gekennzeichnet, daß es für die Überwachung der Repeater (18, 29, 20, 21) der Nebenleitungen (26, 27) wenigstens ein auf die Wellenlänge (λ₁, λ₂), die für die Nebenleitungen vorgesehen ist, abstimmbares Filter (60) umfaßt, wobei dieses Filter den Ausgang des Senders (51) des Fernüberwachungssignals mit dem optischen Leiter (10) verbindet, wobei ein Umschalter (61) es erlaubt, dieses Filter für die Fernüberwachung der Repeater (14, 15, 16, 17) des Hauptleiters (10) außer Betrieb zu setzen.

11. System nach einem beliebigen der vorhergehenden Ansprüche, dadurch gekennzeichnet, daß es für eine Anlage bestimmt ist, bei der die optischen Leiter optische Fasern aus mit Germanium dotierten Siliziumoxid umfassen.

12. Anlage zur Signalübertragung über optische Leiter (10), die ein Überwachungssystem für die Repeater gemäß einem der vorhergehenden Ansprüche umfaßt.
